# EUROPÄISCHE PATENTSCHRIFT

(11) **EP 0 503 423 B1**
(45) Veröffentlichungstag und Bekanntmachung des Hinweises auf die Patenterteilung: **28.06.1995**
(21) Anmeldenummer: 92103540.8
(22) Anmeldetag: 02.03.1992
(51) Int. Cl.: B65D 88/72, B01J 8/00, F27D 3/00

(54) **Verfahren zur Fluidisierung und pneumatischen Förderung feinkörniger Feststoffe und zugehörige Vorrichtung**
Process and apparatus for fluidising and the pneumatic transport of finely granulated material
Procédé et dispositif de fluidisation et de transport pneumatique des matières solides à grains fins

(30) Priorität: 13.03.1991 DE 4108048
(43) Veröffentlichungstag der Anmeldung: 16.09.1992
(73) Patentinhaber: Thyssen Stahl Aktiengesellschaft, 47161 Duisburg (DE); MANNESMANN Aktiengesellschaft, 40027 Düsseldorf (DE)
(72) Erfinder: Meichsner, Walter, Dipl.-Ing., D-51145 Krefeld (DE); Schöler, Horst Dieter, Dr.-Ing., D-47058 Duisburg (DE); Golloch, Hans-Dieter, D-56242 Quirnbach (DE)
(74) Vertreter: Cohausz & Florack Patentanwälte

(56) Entgegenhaltungen:
- DE-A- 1 145 549
- DE-A- 1 815 066
- GB-A- 771 220

## Beschreibung

Die Erfindung betrifft ein Verfahren zur Fluidisierung und pneumatischen Förderung eines feinkörnigen Feststoffes, insbesondere von Entschwefelungsmitteln, aus einem Druckfördergefäß, wobei von drei dem Feststoff zugeführten Gasen verschieden hohen Druckes P1, P2 und P3 der Gasstrom mittleren Druckes P2 in das Gefäß oberhalb des Feststoffes, der Gasstrom höheren Druckes P1 zum Fluidisieren des Feststoffes in den unteren konischen Bereich des Gefäßes und der Gasstrom niederen Druckes P3 in die daran angeschlossene Förderleitung geleitet wird, wobei der Gasstrom höheren Druckes P1 zum Fluidisieren des Feststoffes in eine Vielzahl von Einzelgasströmen aufgeteilt ist; die Erfindung betrifft ferner ein zugehöriges Druckfördergefäß, bestehend aus einem oberen Abschnitt und einem unteren konischen Abschnitt, der mit einer pneumatischen Auflockerungsvorrichtung aus rohrförmigen Fluidisierungselementen ausgerüstet ist, die über die Länge verteilt Austrittsbohrungen für die Einzelgasströme besitzen. Ein derartiges Verfahren sowie eine Vorrichtung zur Durchführung des Verfahrens werden in der britischen Patentschrift GB-A-771 220 beschrieben.

Für die pneumatische Förderung von feinkörnigen Feststoffen ist es wichtig, eine möglichst vollständige und homogene Suspension der Feststoffe in der Gasphase zu bilden. Von besonderer Bedeutung ist die Fluidisierung bei der Injektion von Feststoffen in flüssige Metallschmelzen, z. B. von Entschwefelungsmitteln in Roheisenschmelzen, da dabei ein gleichmäßiger Gas-Feststoffstrom über eine Tauchlanze in die Schmelze absolut pulsationsfrei geleitet werden muß.
Fluidisierungselemente, die beispielsweise in konischen Bereich eines Druckfördergefäßes angeordnet sind, sind in verschiedenen Ausführungsformen bekannt. So besteht der flache Auslaufbereich eines Druckfördergefäßes, wie es in der DE-A-1 147 756 beschrieben wurde, aus einer gefritteten, porösen Bronze (s. Figur 2 und zugehörige Beschreibung). Andere bekannte Fluidisierungselemente aus porösen Materialien bestehen z. B. aus Vliesen (faserige Gewebe oder zusammengesinterte Kunststofffasern) oder aus porösen keramischen Werkstoffen oder Sintermetallelementen. Diese porösen Fluidisierungselemente sind in der Regel kostengünstig; sie werden vielfach für den pneumatischen Transport von Feststoffen dort eingesetzt, wo die Anforderungen an eine komplette und homogene Fluidisierung nicht so hoch sind oder wenn es darum geht, das Fördergut aus einem Gefäß ausfließen zu lassen, d. h. um es "gleitfähig" zu machen, wie z. B. bei der Entnahme aus einem Silo. Die porösen Fluidisierungselemente arbeiten mit geringen Gasdruck, weisen einen geringen Gasströmungswiderstand auf und sind somit für die genannten Zwecke gut geeignet. Das Gas strömt großflächig in die aufliegenden Feststoffschicht, wirbelt diese auf, so daß eine dünne "Gleitschicht" entsteht, worauf der ansonsten verdichtete Feststoff ausfließen kann. Die Fluidisierungswirkung ist bei diesen porösen Elementen nicht tiefgängig, es sei denn, man bietet sehr große Gasmengen an, die dann mit hoher Geschwindigkeit durch das Element fließen und tief in die Fördergasschicht eindringen, um den gewünschten Effekt einer vollständigen Suspension zu erreichen. Große Gasmengen haben jedoch den Nachteil, daß der Gasverbrauch hoch ist, daß der Druck in dem zugehörigen Druckfördergefäß sehr schnell ansteigen würde und daß eine exakte Dosierung der Fördergasraten z. B. für die Einhaltung der Bedingungen einer Dichtstromförderung nicht möglich ist.

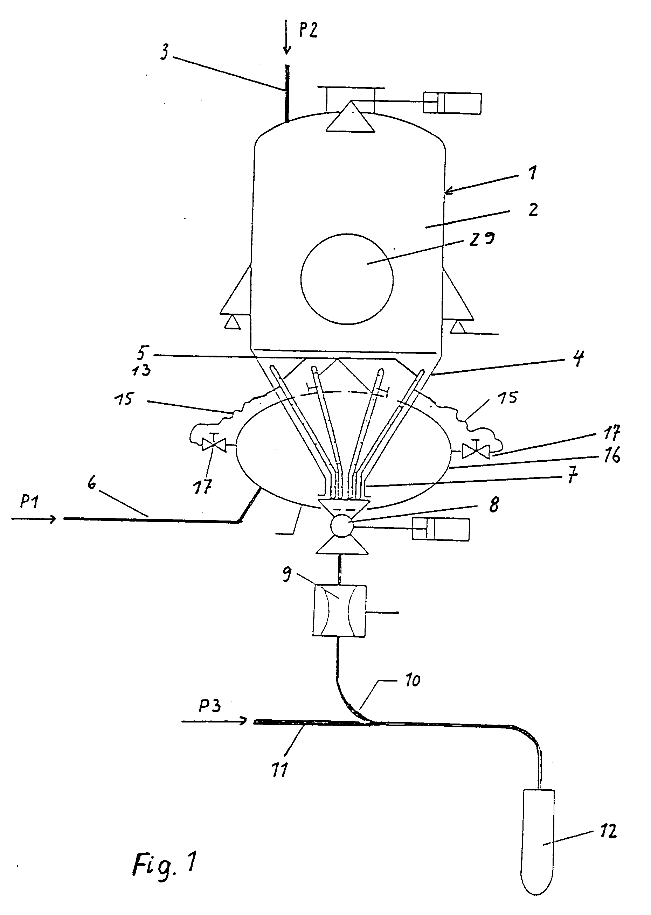

Für eine Tiefenfluidisierung ist es aus der deutschen Patentschrift 1 147 756 bekannt, Düsen zu verwenden, die in den Innenkegel eines doppelwandigen Auslaufbodens eines Druckfördergefäßes eingeschraubt sind (s. Figur 1 und zugehörige Beschreibung). Diese Düsen bestehen z. B. aus Schrauben, die axial mit kleinen Bohrungen versehen sind und somit bei entsprechendem hohen Versorgungsgasdruck einen "scharfen" Gasstrahl in die Feststoffsäule einleiten. Um den Gasverbrauch gering zu halten, werden die Bohrungen möglichst fein ausgeführt, d. h. mit sehr geringen Durchmessern (z. B. < 0,2 mm). Dieses System hat den Nachteil, daß es sehr aufwendig in der Herstellung ist. Es sind zwei schalenförmige Bauteile herzustellen, wobei das innere Bauteil mit einer großen Zahl von Bohrungen versehen werden muß, in welche Gewinde genau maßhaltig geschnitten werden müssen. Außerdem ist die Herstellung einer Vielzahl von Düsen sehr kostspielig, weil winzige Präzisionsbohrungen vorzusehen sind, um die Gasdurchflußmenge genau definieren zu können. Auch erforderlich werdende Reparaturen sind mit einem hohen Aufwand an Zeit und Kosten verbunden. Darüber hinaus findet bei diesem System eine nur punktuelle Beaufschlagung des Feststoffes mit Fluidisierungsgas statt, d. h. daß die Feststoffpartikel nur im begrenzten, unmittelbar von dem dünnen impulsreichen Gasstrahl betroffenen Raum in den gewünschten Suspensionszustand überführt werden, der für eine gleichmäßige Förderung mit geringen Gasmengen unerläßlich ist. Wie in der deutschen Patentschrift 11 47 756 beschrieben, ist man daher bestrebt, eine möglichst große Anzahl an Düsen über eine möglichst große Fläche zu verteilen und eine möglichst hohe Flächendichte zu erreichen. Damit steigt aber wiederum der Gasverbrauch, eine Dichtstromförderung kann nicht eingestellt werden, die Gasregelmöglichkeiten werden eingeschränkt, der Behälterdruck und der Aufwand zur Herstellung derartiger Fluidisierungseinrichtungen steigen erheblich an.

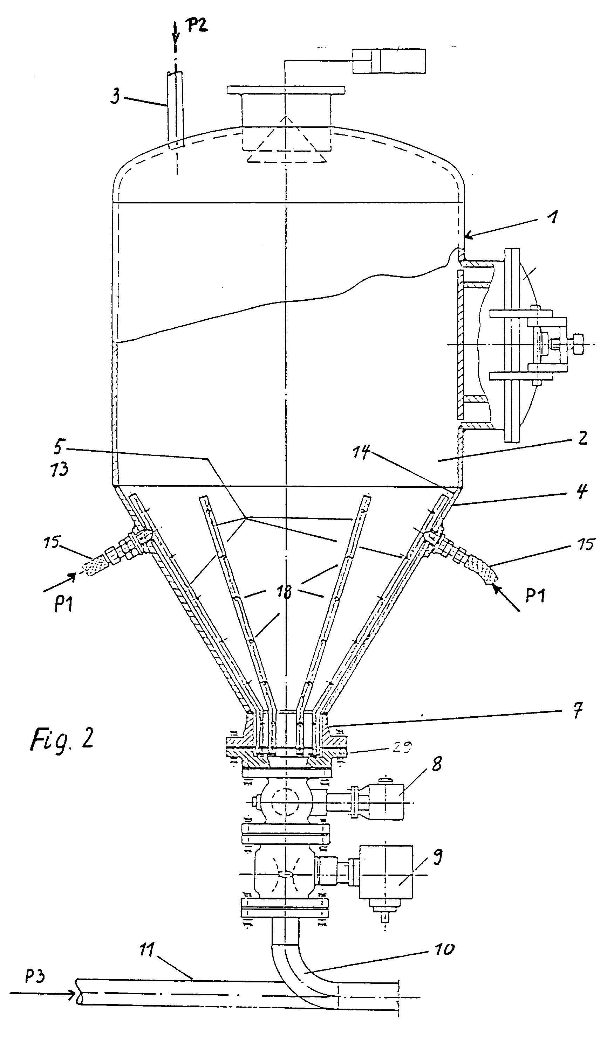

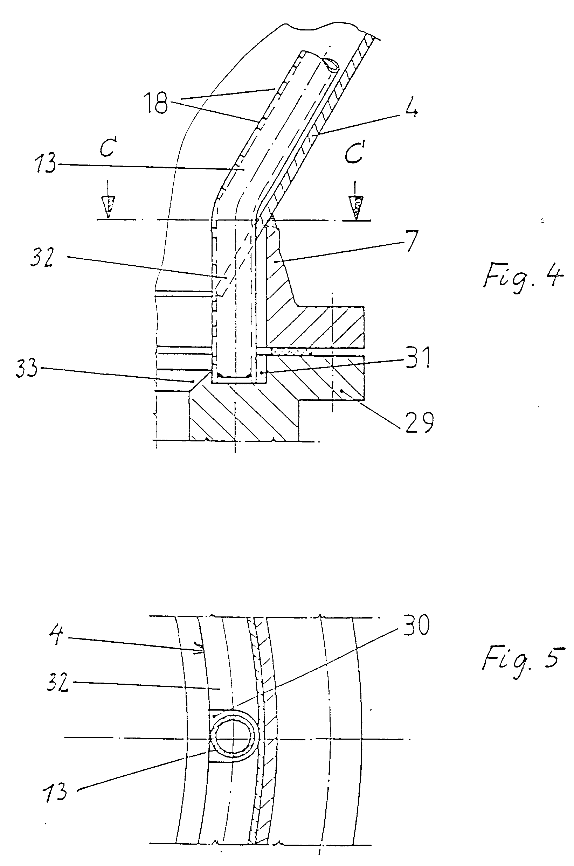

Aus der deutschen Offenlegungsschrift 19 12 733 ist eine Vorrichtung zum pneumatischen Fördern von Schüttgut bekannt (s. Figuren 2 und 4 und zugehörige Beschreibung), die im Auslaufkonus eines Feststoffbehälters eine Auflockerungsvorrichtung aufweist, bei der es sich um Rohre mit mehreren Ausflußöffnungen handelt, die auf der Innenseite des Auslaufkonus angeordnet sind. Die Rohre sind an einer Ringleitung angeschlossen, der über eine Leitung Fluidisierungsgas zugeführt wird. Eine gesteuerte Zuführung des Fluidisierungsgases ist hiermit nicht möglich. Wenngleich eine derartige Anordnung den apparativen Aufwand gegenüber der Einzeldüsenanordnung erheblich verringert, so ist der Fluidisierungseffekt aufgrund der großen Zwischenräume zwischen den einzelnen Ausflußöffnungen, insbesondere im oberen Bereich des konischen Bodens, unbefriedigend; auch kann die Anzahl der Rohre nicht beliebig vermehrt werden, da sie in unteren Bereich in der Nähe der Auslauföffnung den gesamten Raum besetzen und der apparative Aufwand sowie auch der Gasverbrauch erneut ansteigen würden. Eine derartige Anordnung kann somit den hohen Anforderungen der Erzeugung einer homogenen, hochbeladenen Feststoff-Gas-Suspension mit geringem Aufwand und einer wartungsfreundlichen Vorrichtung nicht genügen.

In der DE-A-18 15 066 ist eine Auslaufeinrichtung eines Silobehälters für Schütt- und/oder Staubgut beschrieben worden mit zwei Auslaufkonen, die sich nach unten unterschiedlich stark verjüngen. Beim unteren Auslaufkonus werden die Auslaufmittel durch eine Wandung gebildet, die kegelförmig ausgebildet und porös ist und mit Druckluft beaufschlagbar ist. Die Auslaufmittel für den oberen Auslaufkonus bestehen aus mehreren auf dem inneren Umfang des Auslaufkonus verteilt angeordneten, an eine Druckluftzuleitung angeschlossenen Schläuchen mit Porositäten. Die eingeleitete Druckluft tritt perlend aus den Porositäten dar Schläuche aus, durchsetzt das fließende Gut von unten nach oben, lockert es dabei auf und bildet gleichzeitig ein Luftkissen als Gleitfläche. Nachteilig ist der aus zwei Auslaufkonen bestehende Aufbau. Die eingeleitete Druckluft tritt in unterschiedlichen Richtungen aus den porösen Schläuchen aus, so daß eine gezielte Strömungserzeugung und damit eine Verbesserung der Fluidisierungswirkung in einem ausreichenden Maß nicht eingestellt werden kann.

Die deutsche Patentschrift DE-A-11 52 947 zeigt einen konischen Druckbehälter, in welchem ein aus vier Streben bestehendes Rohrgestell eingesetzt ist. Mit diesen Streben ist eine elastische Hülle derart befestigt, daß Zwischen der Innenwand des Behälters und der elastischen Hülse vier in Förderrichtung sich verengende Räume entstehen, in welche Druckluft eingeblasen werden kann. Wechselseitige Druckbeaufschlagung der Kammern dehnt die einzelnen Kammern aus und verhindert so eine Brückenbildung und ein Anbacken der Feststoffe an der Behälterwand. Die in den Behältern eingesetzten Streben können rohrförmig und mit Bohrungen ausgestattet sein, durch welche Druckluft tangential entlang der Innenwand des elastischen Einsatzes geblasen werden kann. Bei der aus der DE-PS 11 52 947 bekannten Vorrichtung dient diese Maßnahme lediglich dazu, das Anbacken des Feststoffes an der elastischen Wand zu verhindern, um somit einen möglichst störungsfreien Feststoffaustrag aus dem Behälter zu ermöglichen. Eine Verwirbelung des Feststoffes und damit eine Fluidisierung kann hierdurch nicht erreicht werden, da das Gas in das pulverförmige Material nur unwesentlich eindringt.

Sämtlichen beschriebenen Fluidisierungsverfahren ist gemeinsam, daß die Gasströme i. w. ungerichtet oder ausschließlich senkrecht zur Gefäßwand in die Feststoffmasse eindringen. Die räumlich begrenzte Aufwirbelung - entweder in einer dünnen Grenzschicht bei großflächigen Elementen oder punktuell bei düsenartigen Gebilden - erfolgt damit mehr oder weniger unvollständig und zufällig.

Aufgabe der vorliegenden Erfindung ist es daher, ein Verfahren zur Fluidisierung und pneumatischen Förderung feinkörniger Feststoffe und eine zugehörige Vorrichtung vorzuschlagen, mit der die beschriebenen Nachteile vermieden werden können. Insbesondere soll verfahrensgemäß die Fluidisierungswirkung verbessert werden und vorrichtungsgemäß der Fertigungsaufwand verringert sowie Reparatur- und Auswechselungsarbeiten erleichtert werden.

Die verfahrensmäßige Lösung dieser Aufgabe ist in Anspruch 1 angegeben; vorteilhafte verfahrensmäßige Einzelheiten sind in den Unteransprüchen aufgeführt. Die vorrichtungsgemäße Lösung ist in Anspruch 5 angegeben; vorteilhafte vorrichtungsgamäße Einzelheiten sind in den Unteransprüchen aufgeführt.

Beim Verfahren sind erfindungsgemäß die Einzelgasströme gruppenweise zu rohrförmigen Fluidisierungselementen zusammengefaßt, wobei ein Teil der Einzelgasströme normal zur Behälterwand und ein Teil der Einzelgasströme abweichend von der Normalen zur Behälterwand in den Feststoff eingeleitet werden und wobei die Richtungen aller Einzelgasströme so aufeinander abgestimmt sind, daß eine im wesentlichen horizontale zirkulierende Bewegung der Feststoffteilchen und damit eine größere Effizienz der Fluidisierungswirkung erreicht wird. Die Feststoffteilchen werden also nicht nur wie bisher ungeregelt durcheinander gewirbelt, sondern gleichzeitig einer zirkulierenden Bewegung unterworfen, wodurch die gesamte Feststoffmasse fluidisiert wird. Da nach Anspruch 2 zusätzlich im zylindrischen Auslauf des konischen Gefäßbereiches eine Vielzahl von Einzelgasströmen in den ausfließenden Feststoff eingeblasen wird, wird die gesamte austretende Feststoffmasse von Gasstrahlen durchdrungen. Dies hat den weiteren Vorteil, daß bei einer Unterbrechung des Fördervorganges, welches ein Schließen eines anschließenden Ventils zur Folge hat, auch in diesem "toten" Bereich die Fluidisierung aufrechterhalten werden kann.
Nach Anspruch 3 können die Gruppen der Einzelgasströme geregelt werden. Nach Anspruch 4 können die Gruppen der Einzelgasströme in zeitlicher Abfolge unterschiedlich über Volumen oder Druck geregelt werden. Auf diese Weise kann Brückenbildungen entgegengewirkt werden, wenn diese Maßnahme in zeitlichen Abständen durchgeführt wird.

Bei der erfindungsgemäßen Vorrichtung ist wesentlich, daß die rohrförmigen Fluidisierungselemente einzeln auswechselbar auf der Innenwand des konischen Abschnittes des Druckfördergefäßes angeordnet sind. Dies erleichert die Austauschbarkeit bei Neuerstellung oder bei Reparaturarbeiten. Jedes Fluidisierungselement ist mit einer gesonderten Zuleitung für das Fluidisierungsgas versehen. Außerdem kann jede gesonderte Zuleitung ein Regelorgan zur Einzelregelung des Fluidisierungsgasstromes besitzen. Hierdurch kann die Fluidisierungswirkung gezielt eingestellt werden. Die Anzahl, die Verteilung, der Durchmesser und die Richtung der Austrittsbohrungen in den rohrförmigen Fluidisierungselementen sind entsprechend der Art des zu fluidisierenden Feststoffes zu bemessen. Da jedes Fluidisierungselement durch eine eigene Gaszufuhrleitung versorgt wird, welche durch eine Bohrung in der Wand des konischen Bereiches zugeführt, abgedichtet und von außen gegen die Wand befestigt wird, kann das Fluidisierungselement auf diese Weise mechanisch fixiert sowie durch eine Haltevorrichtung im unteren Teil des konischen Bereiches arretiert werden. Jedes Fluidisierungselement weist auf der nach innen gekehrten Seite in geeigneten Abständen kleine Bohrungen auf, und zwar teils normal zur Wandfläche und teils in seitlicher Richtung, wobei die Richtungen aller Einzelgasströme so aufeinander abgestimmt sind, daß eine zirkulierende Bewegung der Feststoffteilchen erzeugt wird. Hierzu ist es vorteilhaft, daß die Bohrungen in der Wand der rohrförmigen Fluidisierungselemente im Querschnitt innerhalb eines Quadranten angeordnet sind, dessen einer Schenkel auf einem Radiusstrahl des Gefäßachse liegt. Schließlich ist es vorteilhaft, daß sich die rohrförmigen Fluidisierungselemente bis in den zylindrischen Auslauf des konischen Gefäßbereiches erstrecken, um die bereits geschilderten "toten" Bereiche bei einer Unterbrechung des Fördervorganges durch Schließen eines Ventils zu vermeiden.

Die erfindungsgemäße Vorrichtung hat außerdem den Vorteil, daß die einzelnen Fluidisierungselemente preisgünstig zu fertigen sind und daß die Anzahl und die Anordnung der Bohrungen auf einem der Fluidisierungselemente oder in der Gesamtheit jederzeit leicht zu variieren sind und somit eine Optimierung mit geringstem Aufwand möglich wird. Dazu wird jedes einzelne Fluidisierungselement entsprechend mit den erforderlichen Bohrungen versehen. Darüber hinaus kann die erfindungsgemäße Vorrichtung durch Simulation im Glas- oder Plexiglasmodell mit geringstem Aufwand stoffspezifisch optimiert werden, wobei dieselben Elemente dann anschließend für die Betriebsanlage verwendet werden können.

Durch die Wahl der Querschnittsform der rohrförmigen Fluidisierungselemente kann, je nach Anwendungsfall, die Rotationsströmung der Gas-Feststoff-Suspension gezielt beeinfluß werden, wobei auch hier Versuche im 1:1-Maßstab im Plexiglasmodell schnell zu der jeweiligen Optimierung führen. So ist es z. B. bei sehr feinkörnigen aber leicht zu fluidisierenden Feststoffen günstig, Fluidisierungselemente mit strömungsgünstigen z. B. linsenförmigen oder ovalen Querschnitten zu wählen, um die örtliche Wirbelbildung zu begrenzen. Bei feinkörnigen, jedoch schwer fluidisierbaren Feststoffen ist es dagegen vorteilhaft, Rohre mit polygonalem z. B. dreieckigem Querschnitt zu verwenden, um eine örtliche, gerichtete Wirbelbildung in der zirkulierenden Strömung zu unterstützen. Für grobkörnige Stoffe ist die Verwendung von kreisrunden Querschnitten gut geeignet.

Die Erfindung wird nachfolgend an einem Ausführungsbeispiel erläutert. Es zeigt:
Figur 1 in schematischer Darstellung ein erfindungsgemäßes Druckfördergefäß
Figur 2 eine vergrößerte Darstellung eines erfindungsgemäßen Druckfördergefäßes
Figur 3 eine Ausschnittsvergrößerung bei A in Figur 2 und
Figur 4 eine Ausschnittsvergrößerung bei B in Figur 2
Figur 5 einen Schnitt nach der Linie C-C in Figur 4.

In den Figuren 1 und 2 ist ein erfindungsgemäßes Druckfördergefäß 1 zur Fluidisierung und pneumatischen Förderung eines Entschwefelungsmittels über eine Lanze in eine Roheisenschmelze dargestellt, bestehend aus einem oberen Abschnitt 2 mit einer Zuleitung 3 für das Oberdruckgas P2 und einem unteren konischen Abschnitt 4 mit einer Auflockerungsvorrichtung 5 und einer Zuleitung 6 für das Fluidisierungsgas P1. Der konische Abschnitt 4 weist einen zylindrischen Auslauf 7 auf, der außen flanschartig ausgebildet und mit einem Gegenflansch 29 verbunden ist (s. auch Figur 4); an den Gegenflansch 29 schließt sich ein Verschlußkugelhahn 8 und ein Feststoff-Regelventil 9 an. Über die Förderleitung 10, in welche eine Fördergasleitung 11 für das Fördergas P3 mündet, wird das Entschwefelungsmittel zur Lanze 12 gefördert.

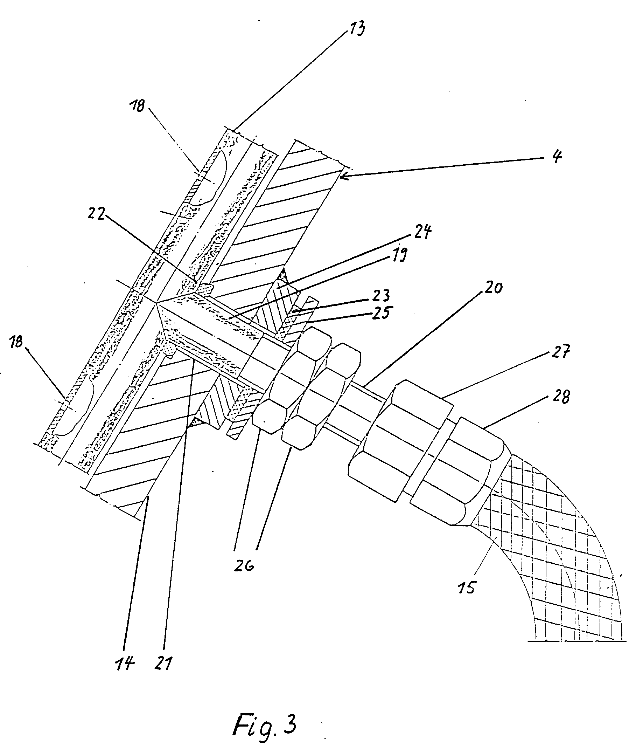

Wie die Figuren 2 und 3 zeigen, besteht die Auflockerungsvorrichtung 5 aus einzelnen, rohrförmigen, an beiden Enden verschlossenen Fluidisierungselementen 13, die im Inneren des konischen Abschnittes 4 auswechselbar angeordnet sind. Sie liegen auf der Innenwand 14 des konischen Abschnittes 4 auf, d. h. daß sie sich der Form der Oberfläche des konischen Abschnittes 4 anpassen. Jedes Fluidisierungselement 13 wird durch eine gesonderte Zufuhrleitung 15 mit dem Fluidisierungsgas versorgt. Die gesonderten Zufuhrleitungen 15 sind mit einer gemeinsamen Ringleitung 16 verbunden, die wiederum mit der Zuleitung 6 in Verbindung steht. Sie weisen ferner je ein Regelorgan 17 auf zur Einzelregelung des Fluidisierungsgasstromes. Jedes Fluidisierungselement 13 weist auf der nach innen gekehrten Seite über die Länge verteilt Bohrungen 18 auf, die teils normal zur Wandfläche und teils abweichend von der Normalen, d. h. in seitlicher Richtung, angeordnet sind, um auf diese Weise eine zirkulierende Bewegung des Entschwefelungsmittels und damit eine Verbesserung der Fluidisierungswirkung zu erreichen.

Das Entschwefelungsmittel wird in eine zirkulierende Bewegung um die senkrechte Gefäßachse gebracht, so daß die gesamte Masse des Entschwefelungsmittels fluidisiert wird, also auch diejenige, die sich in den Zwischenräumen zwischen den Fluidisierungselementen 13 befindet und im fluidisierten Zustand aus dem Druckfördergefäß 1 austreten kann. Im dargestellten Ausführungsbeispiel erstrecken sich die Fluidisierungselemente 13 bis in den zylindrischen Auslauf 7. Das Entschwefelungsmittel wird also auch in diesem Bereich in vorteilhafter Weise von den Gasstrahlen durchdrungen und fluidisiert. Bei einer Unterbrechung des Fördervorganges durch Schließen des Verschlußkugelhahnes 8 kann die Fluidisierung auch in diesem Bereich aufrechterhalten werden, so daß bei Fortsetzung des Fördervorganges die Gefahr von Verstopfungen im zylindrischen Auslauf 7 vermieden werden kann.

Figur 3 zeigt im einzelnen den Anschluß der Fluidisierungselemente 13 an die Zufuhrleitung 15, der gleichzeitig als obere Befestigung der Fluidisierungselemente ausgebildet ist. Das einzelne Fluidisierungselement 13 besitzt zu diesem Zweck einen Anschlußstutzen 19 mit Außengewinde 20. Die zugehörige Bohrung 21 in der Wand 14 des konischen Abschnittes 4, in die der Anschlußstutzen 19 eingeführt wird, besitzt innen eine Ausdrehung zur Aufnahme einer Dichtung 22 und außen eine aufgeschweißte Verstärkungsplatte 24; an die Verstärkungsplatte 24 schließt sich eine Dichtungsscheibe 23 und eine Unterlegscheibe 25 an. Mittels zweier Gegenmuttern 26 auf dem Außengewinde 20 wird das einzelne Fluidisierungselement 13 an der Wand 14 befestigt. Die Zufuhrleitung 15 ist mit einem Aufnahmeteil 28 für den Anschlußstutzen 19 ausgerüstet; eine Überwurfmutter 27 mit einer nichtdargestellten Dichtung dient zur gasdichten Verbindung des Anschlußstutzens 19 mit der Zufuhrleitung 15.

Figur 4 und 5 zeigen im einzelnen die Haltevorrichtung, mit der die einzelnen Fluidisierungselemente im unteren Bereich befestigt werden. Zu diesem Zweck weist der Gegenflansch 29 eine ringförmige Führungsnut 31 auf, in welche die Fluidisierungselemente 13 eingreifen. Die Wand des konischen Abschnittes 4, die, wie bei 32 gestrichelt dargestellt, über den Auslauf 7 nach innen vorsteht, weist Aussparungen 30 zur Führung der Fluidisierungselemente 13 auf. Der Gegenflansch 29 weist eine Abschrägung 33 auf. Der Überstand 32 und die Abschrägung 33 tragen dazu bei, daß Ablagerungen von Feststoff vermieden werden können.
Die einzelnen Fluidisierungselemente können somit in einfacher Weise montiert oder ausgetauscht werden, und zwar entweder von unten nach Entfernen des Verschlußkugelhahnes 8 und des Feststoffregelventiles 9 oder von oben über ein in der Wand des Druckfördergefaßes 1 angeordnetes verschließbares Mannloch 29. Eine komplizierte Demontage, wie sie beispielsweise bei dem bekannten doppelwandigen Auslaufboden der deutschen Patentschrift 1 147 756 erforderlich ist, kann daher in vorteilhafter Weise entfallen.

## Patentansprüche

1. Verfahren zum Fluidisieren und pneumatischen Fördern eines feinkörnigen Feststoffes aus einem Druckfördergefäß (1), wobei von drei dem Feststoff zugeführten Gasen verschieden hohen Druckes (P1,P2,P3) der Gaststrom mittleren Druckes (P2) in das Druckfördergefäß (1) oberhalb des Feststoffes, der Gasstrom höheren Druckes (P1) zum Fluidisieren des Feststoffes in den unteren konischen Abschnitt (4) des Druckfördergefäßes (1) und der Gasstrom niedrigen Druckes (P3) in die daran angeschlossene Förderleitung (10) geleitet wird, wobei der Gasstrom höheren Druckes (P1) zum Fluidisieren des Feststoffes in eine vielzahl von Einzelgasströmen aufgeteilt ist,
**dadurch gekennzeichnet**,
- daß die Einzelgasströme gruppenweise in rohrförmigen, sich entlang einer Mantellinie des unteren konischen Abschnittes (4) des Druckfördergefäßes (1) erstreckenden, an beiden Enden verschlossenen, Fluidisierungselementen (13) zusammengefaßt sind, von denen aus der eine Teil der Einzelgasströme normal zur Wand des Druckfördergefäßes (1) ausgerichtet, über entsprechend normal zur Wand des Druckfördergefäßes (1) ausgerichtete Austrittsbohrungen (18) in das Druckfördergefäß (1) eingeleitet wird und von denen aus der andere Teil der Einzelgasströme in eine von der Normalen zur Wand des Druckfördergefäßes (1) abweichenden Richtung über entsprechend ausgerichtete Austrittsbohrungen (18) in das Druckfördergefäß (1) eingeleitet wird, die abweichend von der Normalen in seitlichen Richtung verlaufen, wobei die Richtung aller Einzelgasströme so aufeinander abgestimmt sind, daß zumindest in den an die konische Behälterwand angrenzenden Bereichen des fluidisierten Feststoffes eine im wesentlichen horizontale Rotationsströmung erzeugt wird,
- daß jedes Fluidisierungselement (13) mit einer gesonderten Zuführung (15) für das Fluidisierungsgas versehen ist und
- daß der Gasstrom höheren Drucks (P1) ausschließlich über die Fluidisierungselemente (13) in das Druckfördergefäß (1) eingeleitet wird.

2. Verfahren nach Anspruch 1
**dadurch gekennzeichnet**, daß zusätzlich im zylindischen Auslauf (7) des konischen Gefäßabschnittes (4) über die Fluidisierungselemente (13) eine Vielzahl von Einzelgasströmen in den ausfließenden Feststoff eingeblasen wird.

3. Verfahren nach Anspruch 1 und 2
**dadurch gekennzeichnet**, daß die Gruppen der Einzelgasströme geregelt werden.

4. Verfahren nach Anspruch 1 bis 3
**dadurch gekennzeichnet**, daß die Gruppen der Einzelgasströme in zeitlicher Abfolge unterschiedlich über Volumen oder Druck geregelt werden.

5. Druckfördergefäß zur Durchführung des Verfahrens nach einem der Ansprüche 1 bis 4 bestehend aus einem oberen Abschnitt (2) und einem unteren konischen Abschnitt (4), der mit einer pneumatischen Auflockerungsvorrichtung (5) aus rohrförmigen Fluidisierungselementen (13) ausgerüstet ist, die über die Länge verteilt Austrittsbohrungen (18) für die Einzelgasströme besitzen,
**dadurch gekennzeichnet**, daß die rohrförmigen Fluidisierungselemente (13) jeweils an ihren beiden Enden verschlossen und lösbar auf einer in dem Druckfördergefäß (1) angeordneten Haltevorrichtung (31) arretiert sind, daß die Einleitung des Gasstroms hohen Drucks (P1) in das Druckfördergefäß (1) ausschließlich über die rohrförmigen Fluidisierungselemente (13) erfolgt, daß der eine Teil der Austrittsbohrungen (18) der rohrförmigen Fluidisierungselemente (13) normal zur Gefäßwand angeordnet ist, während der andere Teil der Austrittsbohrungen (18) in seitlicher Richtung abweichend von der Normalen zur Gefäßwand ausgerichtet ist, und daß jedes rohrförmige Fluidisierungselement (13) mit einer gesonderten Zufuhrleitung (15) für das Fluidisierungsgas versehen ist.

6. Druckfördergefäß nach Anspruch 5
**dadurch gekennzeichnet**, daß jede gesonderte Zufuhrleitung (15) ein Regelorgan (17) zur Einzelregelung des Fluidisierungsgasstroms aufweist.

7. Druckfördergefäß nach Anspruch 5 und 6
**dadurch gekennzeichnet**, daß die Anzahl, die Verteilung, die Durchmesser und die Richtung der Austrittsbohrungen (18) in den rohrförmigen Fluidisierungselementen (13) entsprechend der Art des zu fluidisierenden Feststoffes anhand des Ergebnisses einer Simulation in einem Glas- oder Plexiglasmodell des Druckfördergefäßes bemessen sind.

8. Durckfördergefäß nach Anspruch 5 bis 7
**dadurch gekennzeichnet**, daß die Haltevorrichtung (31) ringförmig ausgebildet und im unteren Teil (29) des konischen Abschnittes des Druckfördergefäßes (1) angeordnet ist und daß die rohrförmigen Fluidisierungselemente (13) einerseits durch die ringförmige Haltevorrichtung (31) und andererseits durch die Befestigung der besonderen Zufuhrleitung (15) für das Fluidisierungsgas in der Wand (14) des konischen Bereichs (4) des Druckfördergefäßes (1) arretierbar sind.

9. Druckfördergefäß nach Anspruch 5 bis 8
**dadurch gekennzeichnet**, daß sich die rohrförmigen Fluidisierungselemente (13) bis in den zylindrischen Auslauf (7) des konischen Gefäßbereiches (4) erstrecken.

10. Druckfördergefäß nach Anspruch 5 bis 9
**dadurch gekennzeichnet**, daß die Bohrungen (18) in der Wand der rohrförmigen Fluidisierungselemente (13) im Querschnitt innerhalb eines Quadranten angeordnet sind, dessen einer Schenkel auf einem Radiusstrahl der Gefäßachse liegt.

11. Druckfördergefäß nach Anspruch 5 bis 10 **dadurch gekennzeichnet**, daß die Querschnittsform der rohrförmigen Fluidisierungselemente (13) entsprechend der Art des zu fluidisierenden Feststoffes
ausgebildet ist.

12. Druckfördergefäß nach Anspruch 11
**dadurch gekennzeichnet**, daß die rohrförmigen Fluidisierungselemente (13) im Querschnitt kreisrund, linsenförmig, oval oder polygonal ausgebildet sind.

## Claims

1. A process for the fluidization and pneumatic delivery of a fine-grained solid from a pressurized delivery vessel (1), wherein of three gases (P1, P2, P3) of different pressure level supplied to the solid, the medium pressure gas flow (P2) is sent to the pressurized delivery vessel (1) above the solid, the higher pressure gas flow (P1) for the fluidization of the solids is sent to the lower conical portion (4) of the pressurized delivery vessel (1), and the lower pressure gas flow (P3) is sent to the delivery line (10) connected thereto, the higher pressure gas flow (P1) for the fluidization of the solid being subdivided into a plurality of individual gas flows, characterized in that
- the individual gas flows are combined in groups to form tubular fluidization elements (13) closed at both ends and extending along a generatrix of the lower conical portion (4) of the pressurized delivery vessel (1), from which one portion of the individual gas flows is directed at right angles to the wall of the pressurized delivery vessel (1) and introduced into the pressurized delivery vessel (1) via outlet bores (18) directed correspondingly at right angles to the wall of the pressurized delivery vessel (1), and from which the other portion of the individual gas flows is introduced into the pressurized delivery vessel (1) in a direction differing from right angles to the wall of the pressurized delivery vessel (1) via correspondingly directed outlet bores (18) which extend differing from right angles in the lateral direction, the direction of all the individual gas flows being so adjusted to one another that a substantially horizontal rotational flow is generated at least in those zones of the fluidized solid which adjoin the conical vessel wall,
- each fluidization element (13) has a separate supply line (15) for the fluidization gas, and
- the higher pressure gas flow (P1) is introduced into the pressurized delivery vessel (1) exclusively via the fluidization elements (13).

2. A process according to claim 1, characterized in that in the cylindrical discharge (7) of the conical portion (4) of the vessel a plurality of individual gas flows is also injected via the fluidization elements (13) into the emerging solid.

3. A process according to claims 1 and 2, characterized in that the groups of individual gas flows are controlled.

4. A process according to claims 1 to 3, characterized in that the groups of individual gas flows are controlled differentially in time sequence via volume or pressure.

5. A pressurized delivery vessel for the performance of the process according to one of claims 1 to 4, comprising an upper portion (2) and a conical lower portion (4) having a pneumatic loosening device (5) of tubular fluidization elements (13) formed with longitudinally distributed discharge bores (18) for the individual gas flows, characterized in that each of the tubular fluidization elements (13) is closed at both ends and releasably locked on a retaining device (31) disposed in the pressurized delivery vessel (1); the higher pressure gas flow (P1) is introduced into the pressurized delivery vessel (1) exclusively via the tubular fluidization elements (13); one portion of the discharge bores (18) of the tubular fluidization elements (13) is disposed at right angles to the vessel wall, while the other portion of the discharge bores (18) is directed in the lateral direction differing from right angles to the metal wall; and each tubular fluidization element (13) has a separate supply line (15) for the fluidization gas.

6. A pressurized delivery vessel according to claim 5, characterized in that each separate supply line (15) has a control member (17) for the individual control of the fluidization gas flow.

7. A pressurized delivery vessel according to claims 5 and 6, characterized in that the number, distribution, diameter and direction of the discharge bores (18) in the tubular fluidization elements (13) are determined in accordance with the nature of the solid to be fluidized, on the basis of the result of a simulation in a glass or plexiglass model of the pressurized delivery vessel.

8. A pressurized delivery vessel according to claims 5 to 7, characterized in that the retaining device (31) is annular and disposed in the lower part (29) of the conical portion of the pressurized delivery vessel (1), and the tubular fluidization elements (13) can be locked on the one hand by the annular retaining device (31) and on the other hand by the attachment of the separate supply line (15) for the fluidization gas in the wall (14) of the conical zone (4) of the pressurized delivery vessel (1).

9. A pressurized delivery vessel according to claims 5 to 8, characterized in that the tubular fluidization elements (13) extend as far as the cylindrical discharge (7) of the conical zone (4) of the vessel.

10. A pressurized delivery vessel according to claims 5 to 9, characterized in that the bores (18) in the wall of the tubular fluidization elements (13) are disposed in cross-section inside a quadrant one leg of which lies on a radius of the vessel axis.

11. A pressurized delivery vessel according to claims 5 to 10, characterized in that the cross-sectional shape of the tubular fluidization elements (13) is designed in accordance with the kind of solid to be fluidized.

12. A pressurized delivery vessel according to claim 11, characterized in that the tubular fluidization elements (13) are designed, lenticular, oval or polygonal in cross-section.

## Revendications

1. Procédé pour fluidiser et distribuer pneumatiquement une matière solide à grains fins à partir d'un récipient distributeur sous pression (1), le flux de gaz de pression intermédiaire (P2), parmi trois gaz apportés à la matière solide à des pressions différentes (P1, P2, P3), étant dirigé dans le récipient distributeur sous pression (1) au-dessus de la matière solide, le flux de gaz de pression supérieure (P1) destiné à fluidiser la matière solide étant dirigé dans la partie inférieure conique (4) du récipient distributeur sous pression (1), et le flux de gaz de pression inférieure (P3) étant dirigé dans la conduite de distribution (10) qui se raccorde à cette partie (4), le flux de gaz de pression supérieure (P1) destiné à fluidiser la matière solide étant divisé en une multiplicité de flux individuels de gaz,
**caractérisé**
- en ce que les flux individuels de gaz sont réunis par groupes en éléments de fluidisation tubulaires (13), fermés aux deux extrémités, s'étendant le long d'une génératrice de la partie inférieure conique (4) du récipient distributeur sous pression (1), une partie de ces flux individuels de gaz étant introduite dans le récipient distributeur sous pression (1) dans une orientation normale à la paroi du récipient distributeur sous pression (1), par l'intermédiaire de perçages de sortie (18) orientés d'une manière correspondante normalement à la paroi du récipient distributeur sous pression (1), tandis que l'autre partie des flux individuels de gaz est introduite dans le récipient distributeur sous pression (1) dans une direction divergeant de la normale à la paroi du récipient distributeur sous pression (1), par l'intermédiaire de perçages de sortie (18) orientés d'une manière correspondante, qui s'étendent en direction latérale divergeant de ladite normale, les directions de tous les flux individuels de gaz étant réglées les unes par rapport aux autres de telle sorte qu'un écoulement rotatif essentiellement horizontal est produit au moins dans les régions de la matière solide fluidisée qui sont attenantes à la paroi conique du récipient,
- en ce que chaque élément de fluidisation (13) est doté d'une alimentation distincte (15) pour le gaz de fluidisation, et
- en ce que le flux de gaz de pression supérieure (P1) est introduit exclusivement par l'intermédiaire des éléments de fluidisation (13) dans le récipient distributeur sous pression (1).

2. Procédé selon la revendication 1, **caractérisé** en ce qu'une pluralité de flux individuels de gaz est en outre insufflée, par l'intermédiaire des éléments de fluidisation (13), dans la matière solide qui s'écoule dans la sortie cylindrique (7) de la partie conique (4) du récipient.

3. Procédé selon les revendications 1 et 2, **caractérisé** en ce qu'on régule les groupes de flux individuels de gaz.

4. Procédé selon les revendications 1 à 3, **caractérisé** en ce qu'on régule à des volumes différents ou à des pressions différentes, en succession dans le temps, les groupes de flux individuels de gaz.

5. Récipient distributeur sous pression pour la mise en oeuvre du procédé selon l'une des revendications 1 à 4, constitué d'une partie supérieure (2) et d'une partie inférieure conique (4) qui est équipée d'un dispositif pneumatique de désagrégation (5) constitué d'éléments de fluidisation tubulaires (13), qui possèdent des perçages de sortie (18) répartis sur leur longueur pour les flux individuels de gaz,
**caractérisé** en ce que les éléments de fluidisation tubulaires (13) sont respectivement fermés à leurs deux extrémités et assujettis de manière amovible sur un dispositif de maintien (31) disposé dans le récipient distributeur sous pression (1), en ce que l'introduction du flux de gaz de pression supérieure (P1) dans le récipient distributeur sous pression (1) s'effectue exclusivement par l'intermédiaire des éléments de fluidisation tubulaires (13), en ce qu'une partie des perçages de sortie (18) des éléments de fluidisation tubulaires (13) est disposée normalement à la paroi du récipient, tandis que l'autre partie des perçages de sortie (18) est orientée en direction latérale, divergeant de la normale à la paroi du récipient, et en ce que chaque élément de fluidisation tubulaire (13) est pourvu d'une conduite d'alimentation distincte (15) pour le gaz de fluidisation.

6. Récipient distributeur sous pression selon la revendication 5, **caractérisé** en ce que chaque conduite d'alimentation distincte (15) présente un organe de régulation (17) pour la régulation individuelle du flux de gaz de fluidisation.

7. Récipient distributeur sous pression selon les revendications 5 et 6, **caractérisé** en ce que le nombre, la répartition, le diamètre et la direction des perçages de sortie (18) dans les éléments de fluidisation tubulaires (13) sont dimensionnés conformément au type de matière solide à fluidiser, à l'aide du résultat d'une simulation dans une maquette en verre ou en Plexiglas du récipient distributeur sous pression.

8. Récipient distributeur sous pression selon les revendications 5 à 7, **caractérisé** en ce que le dispositif de maintien (31) présente une forme annulaire et est disposé dans l'élément inférieur (29) de la partie conique du récipient distributeur sous pression (1), et en ce que les éléments de fluidisation tubulaires (13) peuvent être assujettis d'une part par le dispositif de maintien annulaire (31) et d'autre part par la fixation de la conduite respective (15) d'alimentation en gaz de fluidisation dans la paroi (14) de la partie conique (4) du récipient distributeur sous pression (1).

9. Récipient distributeur sous pression selon les revendications 5 à 8, **caractérisé** en ce que les éléments de fluidisation tubulaires (13) s'étendent jusque dans la sortie cylindrique (7) de la partie conique (4) du récipient.

10. Récipient distributeur sous pression selon les revendications 5 à 9, **caractérisé** en ce que les perçages (18) dans la paroi des éléments de fluidisation tubulaires (13) sont disposés, vus en coupe transversale, à l'intérieur d'un quadrant dont une branche se trouve sur un rayon vecteur de l'axe du récipient.

11. Récipient distributeur sous pression selon les revendications 5 à 10, **caractérisé** en ce que la forme de section des éléments de fluidisation tubulaires (13) est choisie en fonction du type de matière solide à fluidiser.

12. Récipient distributeur sous pression selon la revendication 11, **caractérisé** en ce que les éléments de fluidisation tubulaires (13) sont réalisés de section circulaire, lenticulaire, ovale ou polygonale.
